# EUROPEAN PATENT SPECIFICATION

(11) **EP 3 950 602 B1**
(45) Date of publication and mention of the grant of the patent: **14.02.2024**
(21) Application number: 20785082.7
(22) Date of filing: 13.03.2020
(51) Int. Cl.: C02F 1/44, B01D 61/04, B01D 61/10, C02F 1/50

(54) **MEMBRANE SEPARATION METHOD**
MEMBRANTRENNVERFAHREN
PROCÉDÉ DE SÉPARATION MEMBRANAIRE

(30) Priority: 29.03.2019 JP 2019065692
(43) Date of publication of application: 09.02.2022
(73) Proprietor: Kurita Water Industries Ltd., Tokyo 164-0001 (JP); Nanyang Technological University, Singapore 639798 (SG)
(72) Inventor: KOMORI Hideyuki, Singapore 637141 (SG); HAYAKAWA Kunihiro, Tokyo 164-0001 (JP); LU Yinghong, Singapore 637141 (SG); CHONG Tzyy Haur, Singapore 639798 (SG); SIM Lee Nuang, Singapore 639798 (SG); HO Jia Shin, Singapore 639798 (SG)
(74) Representative: Becker, Eberhard
(86) International application number: PCT/JP2020/011052
(87) International publication number: WO 2020/203168

(56) References cited:
- WO-A1-2005/019117
- WO-A1-2011/125764
- WO-A1-2013/005787
- WO-A1-2016/158633
- WO-A1-2018/078988
- JP-A- 2017 128 598
- US-A1- 2005 061 741
- US-A1- 2007 034 570
- US-A1- 2014 124 442

## Description

### [Technical Field]

The present invention relates to a membrane separation method.

### [Background Art]

Membrane treatment is performed to remove impurities and ions from wastewater such as various industrial wastewater, domestic wastewater or the like, surface water and groundwater. Besides, a system for performing membrane treatment is widely used by being incorporated into an ultrapure water production process in which industrial water, tap water, wastewater, or the like is used as raw water, a wastewater reuse process, and a seawater desalination process.

However, when a membrane treatment is performed using a permeable membrane such as a reverse osmosis membrane (RO membrane) or the like, pollutants such as suspended substances, organic substances, microorganisms, or the like are contained in water to be treated. These pollutants contaminate the permeable membrane, causing clogging of the permeable membrane. Accordingly, problems such as a decrease in permeation flux or a decrease in separation rate occur. If these problems occur, stable water treatment cannot be continued over a long period of time in a membrane separation unit or a membrane separation system. Therefore, for example, the following membrane separation method has been proposed in order to perform stable membrane separation over a long period of time.

For example, Patent literature 1 describes a membrane separation method characterized in that a combined chlorine agent formed from a chlorine-based oxidizing agent and a sulfamic acid compound is present in feed water or a cleaning agent supplied to a membrane separation unit.

The sulfamic acid compound may be a compound which is constituted of an amidosulfuric acid represented by R¹R²NSO₃H ... [1] or a salt thereof, wherein R¹ and R² are independently H or a hydrocarbon group having 1 to 6 carbon atoms. The chlorine-based oxidizing agent may be chlorine gas, chlorine dioxide, hypochlorous acid or a salt thereof, or the like.

For example, in Patent literature 2, a method is shown in which a membrane separation treatment is performed by adding a combined chlorine agent containing a sulfamic acid compound to the feed water of a membrane separation unit. In this method, the combined chlorine agent is added periodically or irregularly in an amount of T × 2 to 10 times of a normal addition amount of the combined chlorine agent. At this time, Z represented by the following Formula [2] satisfies 1.0 < Z < 2.0. Z = (Mo × T + Mx × Tx)/(Mo × T) ... [2]

(In Formula [2], Mo represents a combined chlorine agent concentration in the feed water when a normal addition amount of an oxidation-combined chlorine agent is added, T represents water flow time, Mx represents a combined chlorine agent concentration in the feed water when 2 to 10 times of the normal addition amount of the combined chlorine agent is added, and Tx represents time required to make water to flow at the concentration Mx of the combined chlorine agent in the feed water.)

For example, Patent literature 3 discloses a membrane separation method in which a membrane separation treatment is performed by intermittently adding a combined chlorine agent containing a sulfamic acid compound to water to be treated which is supplied to a membrane separation unit. The membrane separation method is characterized in that the live cell count (log CFU/mL) of the water to be treated is 3 or more, and in the intermittent addition, a non-addition water supply period and an intermittent addition water supply period are repeated. During the non-addition water supply period, water is supplied without adding the combined chlorine agent. During the intermittent addition water supply period, the combined chlorine agent is added at such a concentration as to peel off a biofilm at an initial stage of biofilm formation in the non-addition water supply period, and water is supplied. The non-addition water supply period continues for 6 to 120 hours, and the intermittent addition water supply period continues for 0.5 to 40 hours. The combined chlorine agent concentration of the water to be treated during the intermittent addition water supply period is a concentration at which a total chlorine concentration becomes 0.5 to 20 mg/L.

Patent literature 4 discloses a method of membrane separation.

### [Reference List]

### [Patent literature]

Patent literature 1: Japanese Patent Laid-Open No. JP 2006-263510 A
Patent literature 2: Japanese Patent Laid-Open No. 2010-201312
Patent literature 3: pamphlet of International Publication No. WO 2013/005787
Patent literature 4: US 2014/0124442 A1

### [Summary of Invention]

### [Technical Problem]

A main object of the present invention is to provide a reverse osmosis membrane separation method whereby the activity of microorganisms in a biofilm is inhibited and stable water treatment can be continued over a long period of time.

### [Solution to Problem]

In the permeable membrane such as the RO membrane or the like, because water being a solvent permeates the membrane, a solute is concentrated on the membrane surface, microorganisms adhere to the membrane surface, and a biofilm is formed by secretion of polysaccharides, proteins, and the like by the microorganisms. If the membrane separation is continued while the microorganisms in the biofilm are left unattended, the biofilm grows thicker due to the activity of the microorganisms in the biofilm. The biofilm grows on the membrane surface, leading to clogging of the membrane, an increase in differential pressure, and a decrease in flux. Finally, stable membrane separation cannot be performed for a long period of time, and water treatment cannot be continued. For this reason, the permeable membrane is cleaned or replaced when the flux drops or periodically, but from the viewpoint of cost and workability due to permeable membrane cleaning and permeable membrane replacement, it is desired that the permeable membrane can be operated in a manner that the water treatment can be continued over a long period of time without cleaning or replacing the permeable membrane as much as possible.

As described above, the microorganisms are present in the biofilm adhering to the reverse osmosis membrane that is being subj ected to the membrane separation, and the biofilm is formed by the activity of the microorganisms in the biofilm. Therefore, in a new approach, the present inventor focused on the inhibition of the activity of the microorganisms in the biofilm, and investigated whether water treatment could be stably continued with the reverse osmosis membrane for a long period of time.

Therefore, the present inventor created a model by incubating the reverse osmosis membrane and microorganisms together, and in this model, microorganisms are active in a biofilm while adhering to the reverse osmosis membrane.

Besides, as a result of intensive studies using the incubation model, the present inventor has found that, when the combined chlorine agent containing a sulfamic acid compound (hereinafter, also referred to as "combined chlorine agent") was used in the reverse osmosis membrane containing the biofilm under short-term intermittent addition conditions, the activity of the microorganisms in the biofilm (particularly the activity of biofilm formation by the microorganisms) can be inhibited. At this time, as for the short-term intermittent addition conditions, each of the duration of the intermittent addition water supply period and the duration of the non-addition water supply period (specifically, a period during which these periods are repeated once) was shortened. In this way, the present inventor has completed the present invention.

The invention is set out in the appended set of claims.

Moreover, although Patent literature 1 discloses that the combined chlorine agent is constantly or intermittently added, in practice, in an example, the combined chlorine agent is constantly added in order to achieve the object. In addition, paragraph [0006] of Patent literature 1 describes that the bactericidal activity of chloramine is as weak as about 1/50 to 1/200 of the bactericidal activity of free chlorine. Thus, in Patent literature 1, it is usually understood that constant addition of a combined chlorine agent formed from a chlorine-based oxidizing agent and a sulfamic acid compound is required in order to prevent contamination of the permeable membrane due to the growth of microorganisms. Therefore, the short-term intermittent addition conditions in the present invention, specifically, the shortening of each of the non-addition water supply period and the intermittent addition water supply period is not realized in Patent literature 1.

In addition, Patent literature 2 discloses in an example that in a process of continuously adding the combined chlorine agent containing a sulfamic acid compound, the combined chlorine agent is added for 24 hours at a concentration 2 to 10 times higher than a normal concentration once every 30 days. Thus, in Patent literature 2, it is usually understood that constant addition of the combined chlorine agent is required because the combined chlorine agent containing a sulfamic acid compound is added at a normal concentration and then at a high concentration. Therefore, the short-term intermittent addition conditions in the present invention, specifically, the shortening of each of the non-addition water supply period and the intermittent addition water supply period is not realized in Patent literature 2.

Besides, Patent literature 3 discloses a method in which a membrane separation treatment is performed by repeating the non-addition water supply period and the intermittent addition water supply period. During the non-addition water supply period, water is supplied without adding the combined chlorine agent, and during the intermittent addition water supply period, the combined chlorine agent is added at such a concentration as to peel off the biofilm at an initial stage of biofilm formation, and then water is supplied. As described above, in Patent literature 3, the intermittent addition conditions are set focusing on the peeling of the biofilm and the initial stage of biofilm formation, but it is hard to say that the microorganisms are active in a lively manner in the initial stage. That is, in Patent literature 3, it cannot be said that the condition setting is sufficient from the viewpoint of inhibiting the activity of the microorganisms in the biofilm (particularly the activity of biofilm formation by the microorganisms). Thus, the short-term intermittent addition conditions in the present invention are newly found from an approach completely different from that in Patent literature 3. Therefore, the short-term intermittent addition conditions in the present invention, specifically, the shortening of each of the non-addition water supply period and the intermittent addition water supply period is not realized in Patent literature 3.

### [Advantageous Effects of Invention]

According to the present invention, it is possible to provide a reverse osmosis membrane separation method whereby the activity of microorganisms in a biofilm is inhibited and stable water treatment can be continued over a long period of time. It should be noted that the effects described herein are not necessarily limited, and any of the effects described in the present specification may be obtained.

### [BRIEF DESCRIPTION OF THE DRAWINGS]

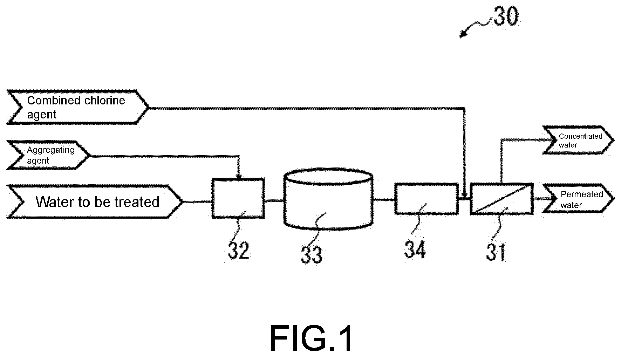

FIG. 1 is a flow diagram of a water system showing an example of an embodiment of the present invention in which a combined chlorine agent is added simultaneously or separately in a front stage of a reverse osmosis membrane treatment system.

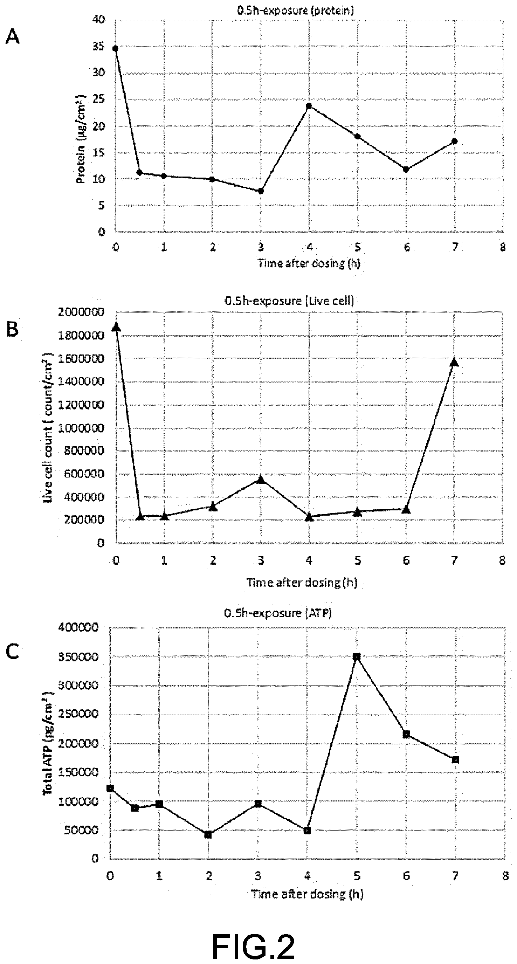

FIG. 2 shows changes in the activity of microorganisms (A of FIG. 2: protein amount, B of FIG. 2: live cell count, C of FIG. 2: total ATP) when an intermittent addition water supply period continues for 0.5 hour and a non-addition water supply period continues for 0 to 6.5 hours. The horizontal axis indicates a total time (h) of the intermittent addition water supply period and the non-addition water supply period, which is the total time from a moment when an agent is added.

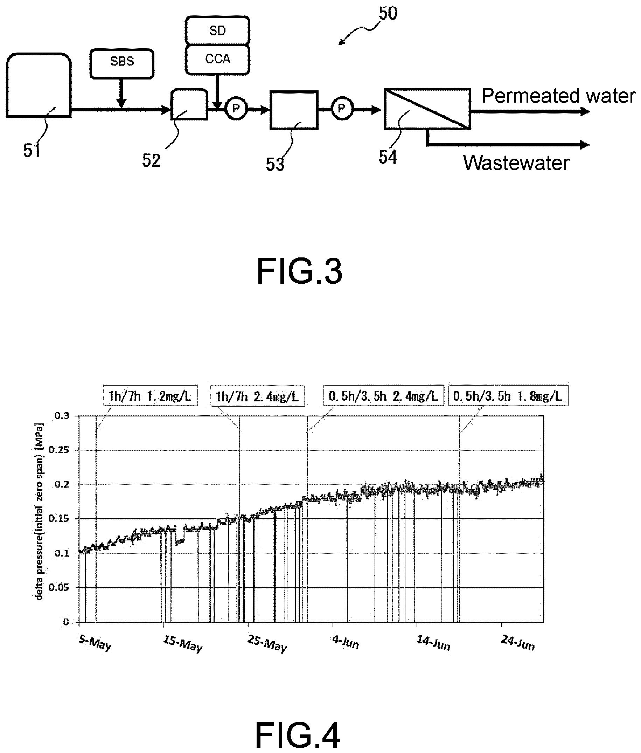

FIG. 3 shows a schematic diagram of an apparatus configuration in a water system test.
FIG. 4 shows changes in delta pressure when intermittent addition conditions are changed in a water system in which a reverse osmosis membrane is used. In the first half, operation is performed during the intermittent addition water supply period (1 h; addition amount of the combined chlorine agent: 1.2 to 2.4 mg/L as combined chlorine) and the non-addition water supply period (7 h). In the latter half, operation is performed during the intermittent addition water supply period (0.5 h; addition amount of the combined chlorine agent: 2.4 to 1.8 mg/L as combined chlorine) and the non-addition water supply period (3.5 h) of the present invention.

### [DESCRIPTION OF THE EMBODIMENTS]

Hereinafter, an embodiment of the present invention is described. It should be noted that the embodiment described below shows an example of typical embodiments of the present invention and is not interpreted as limiting the scope of the present invention. Moreover, an upper limit value and a lower limit value in a numerical value can be arbitrarily combined as desired.

### 1. Membrane separation method according to the present invention

A membrane separation method according to the present invention is a method for performing a membrane separation treatment by an intermittent addition of a combined chlorine agent containing a sulfamic acid compound (hereinafter, also referred to as "the combined chlorine agent") to water to be treated which is supplied to a reverse osmosis membrane separation unit (or a reverse osmosis membrane separation step).

In addition, in the intermittent addition, it is preferable that an intermittent addition water supply period and a non-addition water supply period are repeated. During the intermittent addition water supply period, the combined chlorine agent is added at such a concentration as to inhibit the activity of microorganisms in a biofilm to the water to be treated and the water is supplied to the reverse osmosis membrane separation unit. During the non-addition water supply period, water is supplied to the reverse osmosis membrane separation unit without adding the combined chlorine agent. The membrane separation treatment is preferably performed by alternately repeating the intermittent addition water supply period and the non-addition water supply period.

Furthermore, it is preferable that the intermittent addition water supply period continues for 0.25 to 5 hours and the non-addition water supply period continues for 1 to 5.5 hours.

At this time, during the intermittent water supply period, it is preferable to add the combined chlorine agent containing a sulfamic acid compound to the water to be treated so that the combined chlorine concentration becomes 0.3 to 10 mg/L.

Accordingly, in the reverse osmosis membrane separation method of the present invention, the activity of microorganisms in the biofilm can be inhibited and stable water treatment can be continued over a long period of time. It should be noted that the effects described herein are not necessarily limited, and any of the effects described in the present specification may be obtained.

In addition, the present invention has an advantage as shown in [Example] described later, that is, the activity of microorganisms present in the biofilm can also be inhibited by combining the combined chlorine agent and short-term intermittent addition conditions. In general, the effect of a bactericidal agent, a bacteriostatic agent or the like may not be fully exerted due to the presence of microorganisms in the biofilm. However, by combining the combined chlorine agent and the short-term intermittent addition conditions of the present invention, the activity of biofilm formation can be inhibited with an appropriate amount of agent without the need for adding a large amount of agent, and the amount of biofilm formed by microorganisms, which leads to membrane clogging, can be reduced.

### <1-1. Separation method according to the present invention>

The present invention is a membrane separation method which is performed by supplying water to be treated to a system having membrane separation performance (hereinafter, also referred to as "membrane separation system") or a membrane separation unit. In the present invention, the membrane separation is performed by intermittently adding the combined chlorine agent containing a sulfamic acid compound for a short period of time so as to inhibit the activity of microorganisms in the biofilm. Accordingly, even if the biofilm is present on a permeable membrane, the activity of microorganisms in the biofilm can be inhibited, and in particular, the activity of biofilm formation by microorganisms can be inhibited. Furthermore, in the present invention, more preferably, the membrane separation can be performed in a more favorable and stable manner over a long period of time by designing the combined chlorine agent to have a predetermined concentration (as combined chlorine) in the feed water for membrane separation treatment.

More specifically, the present invention provides a membrane separation method which is performed by supplying water to be treated to a system having membrane separation performance or a membrane separation unit, the system being provided with a permeable membrane such as a reverse osmosis membrane (hereinafter, also referred to as "RO membrane") or the like. The present invention is particularly suitable for a membrane separation method using the RO membrane. Note that, in the specification, the "membrane separation system or membrane separation unit" is also referred to as "membrane separation treatment".

In the present invention, it is preferable to add the combined chlorine agent containing a sulfamic acid compound to the water to be treated under the short-term intermittent addition conditions and then supply feedwater to a RO membrane separation unit or a RO membrane separation system. In the present invention, in order to inhibit the activity of microorganisms in the biofilm, it is preferable to add the combined chlorine agent containing a sulfamic acid compound (hereinafter, also referred to as "the combined chlorine agent") to the water to be treated.

In the present invention, by adding the combined chlorine agent to the water to be treated under the short-term intermittent addition conditions, even if the biofilm is present on the RO membrane, the microorganisms present in the biofilm are more affected, and the activity of the microorganisms can be further inhibited, and in particular, the activity of biofilm formation by the microorganisms can be inhibited. In addition, in the present invention, the thickness of the biofilm adhering to and present on the RO membrane can also be inhibited.

In addition, in the present invention, it is preferable to perform the short-term intermittent addition at an early stage when the biofilm is not sufficiently formed on the RO membrane, whereby the amount of the biofilm which leads to membrane clogging can be further reduced.

In general, the biofilm, which represents a problem in the membrane separation, has adhesiveness and adheres to a substrate such as the permeable membrane or the like. Moreover, the highly adhesive biofilm also adsorbs other particles (specifically, turbidity components such as organic substances, inorganic substances, or the like) contained in the water to be treated, making it more likely to cause membrane clogging.

However, in the present invention, because the activity of the microorganisms in the biofilm (particularly the activity of biofilm formation by the microorganisms) can be inhibited, the amount of the biofilm formed is inhibited, and the amount of the biofilm in the water to be treated or on the reverse osmosis membrane can be reduced.

Therefore, because the amount of the biofilm in contact with the permeable membrane can be inhibited, the membrane clogging caused by the biofilm is more easily prevented, and stable membrane separation is easily performed over a long period of time. Besides, the present invention can provide a membrane separation method whereby stable water treatment can be continued over a long period of time.

### <1-2. Activity of microorganisms in the present invention>

In the present invention, a live cell count, a total ATP, and a protein amount are used as indexes for confirming the inhibition of the activity of microorganisms, but the indexes are not limited thereto.

Microorganisms adhered to a substrate (for example, RO membrane) form an extracellular biofilm by activity, and the number of microorganisms and the amount of biofilm are further increased by the activity of the microorganisms. In this way, the microorganisms adhere to the substrate and secure a living area.

The biofilm contains an extracellular polysaccharide, and the extracellular polysaccharide is also called glycoprotein, peptidoglycan, or the like. The biofilm generally contains proteins or peptides.

In addition, when the live cell count increases due to the proliferative activity of the microorganisms, the total amount of the biofilm also tends to increase.

Additionally, when the microorganisms are in an active state that leads to proliferation, formation of a biofilm, or the like, the total ATP in the microorganisms also tends to increase.

Therefore, in the present invention, the present inventor considered that the inhibition of the activity of microorganisms (particularly the inhibition of the activity of biofilm formation by microorganisms) could be investigated with high precision by measuring at least one of the protein amount, the live cell count, or the total ATP.

### <1-3. Reverse osmosis membrane in the present invention>

The material of the reverse osmosis membrane (including a nanofiltration (NF) membrane) of the present invention is particularly effective to a polymer membrane having nitrogen-containing groups, such as polyamide, especially aromatic polyamide having low tolerance to chlorine, polyurea, and poly(piperazine amide), while cellulose acetate RO membrane and other RO membranes are also applicable. The permeable membrane may be, for example, a cellulose permeable membrane such as cellulose acetate, cellulose triacetate, cellulose nitrate, cellulose, or the like; a permeable membrane having nitrogen-containing groups such as polyacrylonitrile (PAN), aromatic polyamide (aromatic and aliphatic), polyimide, or the like; polycarbonate, polyethylene terephthalate, polyvinyl alcohol, or the like.

The reverse osmosis membrane of the present invention is not particularly limited, and has, for example, a spiral shape, a hollow thread shape, a flat membrane shape, or the like. A skin layer of the reverse osmosis membrane may be made of resin such as cellulose acetate, aromatic polyamide, polyimide, or the like.

In addition, the membrane separation unit or membrane separation system of the present invention can be incorporated into a water treatment system in which natural water such as seawater, river water, well water, lake water, as well as industrial water, tap water, wastewater, or the like is used as raw water, and also can be incorporated into, for example, a water treatment system such as a seawater desalination process, an ultrapure water treatment manufacturing process, a wastewater reuse process, or the like.

### <1-4. Water to be treated>

In the present invention, the water to be treated, which is supplied to the membrane separation unit or the membrane separation system for membrane separation, includes all water applicable to membrane separation by the permeable membrane, such as seawater, river water, well water, lake water, industrial water, city water, wastewater, treated wastewater, or the like. In addition, the water to be treated may contain microorganisms such as bacteria or the like.

In addition, the pH of the water to be treated is not particularly limited, and is preferably pH 3 to 9. The pH of the water to be treated can be appropriately adjusted with an acid or an alkali. In addition, the temperature of the water to be treated is generally about 4 to 40°C, but the present invention is not particularly limited thereto.

### <1-4a. Live cell count in water to be treated>

In the present invention, by inhibiting the activity of the microorganisms present on the osmosis membrane, the amount of the biofilm formed can be reduced, and the total amount of the biofilm in contact with the permeable membrane can be reduced. In addition, in the present invention, it is preferable to perform the short-term intermittent addition at an early stage when the biofilm is not sufficiently formed. The reason is that the total amount of the biofilm can be reduced.

In the present invention, from the viewpoint that stable membrane separation can be continued over a long period of time, it is preferable to add the combined chlorine agent when the amount of the biofilm formed is small. In addition, from the viewpoint of efficiency of agent use, it is preferable to start the addition of the combined chlorine agent before a large amount of biofilm is formed.

Additionally, the live cell count may be appropriately adjusted by using an approach for suppressing the number of microorganisms. For example, various agents such as a bactericidal agent, a bacteriostatic agent or the like may be used, or a sterilizing apparatus (for example, an UV sterilizing apparatus) may be used, but the present invention is not particularly limited thereto.

In addition, the combined chlorine agent can also be used in water to be treated, which is in a harsh condition of a large number of live cell count and high biofilm adhesion potential. Therefore, in the present invention, the live cell count (log count/mL) in the water to be treated is preferably 4 or more, more preferably 5 or more, and an upper limit value of the live cell count can be up to about 6.

### <Measurement method of log count/mL>

In the present invention, the number of bacteria (live cell count) (log count/mL) in the water to be treated can be measured by flow cytometric analysis described in <Method for counting live cell count> described later. Here, log indicates a common logarithm log₁₀.

### <1-4b. Salinity concentration in water to be treated>

The salinity concentration in the water to be treated is not particularly limited. For example, in the present invention, in addition to water to be treated having low salinity such as fresh water, tap water, or the like, stable membrane separation can also be performed over a long period of time even when the water to be treated has high salinity concentration (for example, brackish water, seawater, water mixed with these or salt, or the like). In the present invention, operation can be performed by adjusting the salinity concentration in the water to be treated to a predetermined range, for example, a preferable range of 0 to 50,000 mg/L. In general, when seawater is used as the water to be treated, the salinity concentration is approximately in a range of 25,000 to 50,000 mg/L, and when tap water, fresh water, or the like is used as the water to be treated, the salinity concentration is approximately in a range less than 25,000 mg/L.

### <Measurement method of salinity concentration>

Moreover, the salinity concentration can be measured with a salinity meter based on conductivity measurement.

According to the present invention, even when various raw water is used as the water to be treated, the activity of microorganisms in the biofilm that is present on the reverse osmosis membrane can be inhibited, and stable membrane separation can be performed over a long period of time.

### <1-5. Combined chlorine agent used in the present invention>

In the present invention, the combined chlorine agent added to the water to be treated is a combined chlorine agent containing a sulfamic acid compound. The combined chlorine agent used in the present invention may be, for example, a combined chlorine agent described in WO 2011/125762 (Patent literature 1) and WO 2013/005787 (Patent literature 3).

### <Measurement method of free chlorine concentration, combined chlorine concentration and total chlorine concentration>

In the present invention, free chlorine concentration, combined chlorine concentration and total chlorine concentration are measured as Cl₂ concentration by the DPD method using N, N-diethyl-1,4-phenylenediamine, which is given in JIS K 0400-33-10: 1999. JIS K 0400-33-10: 1999 gives the following definitions.

That is, free chlorine is chlorine existing in a form of hypochlorous acid, hypochlorite ion, or dissolved chlorine. Combined chlorine is chlorine existing in a form of chloramine or organic chloramine, which is included in total chlorine measured by the DPD method but not included in the free chlorine. Total chlorine includes free chlorine, combined chlorine or chlorine existing in the form of the two.

### <1-5a. Combined chlorine agent>

The combined chlorine agent used in the present invention is preferably an agent measured as the above combined chlorine, and more preferably a combined chlorine agent composed of an aqueous solution formulation containing an alkali consisting of an alkali metal hydroxide, a sulfamic acid compound, and a chlorine-based oxidizing agent. The aqueous solution formulation may be used directly as a combined chlorine agent.

The composition ratio of the chlorine-based oxidizing agent to the sulfamic acid compound in the aqueous solution formulation is preferably 0.3 to 0.7, and more preferably 0.4 to 0.6 in terms of Cl/N (molar ratio).

The composition ratio of the chlorine-based oxidizing agent to the alkali metal component in the aqueous solution formulation is preferably 0.15 to 0.5, and more preferably 0.2 to 0.4 in terms of Cl/alkali metal (molar ratio).

The free chlorine concentration in the aqueous solution formulation is preferably 2% by mass or less of the total chlorine concentration.

In addition, the aqueous solution formulation preferably has a pH of 13 or more, and the composition ratio of the sulfamic acid compound to the alkali in the aqueous solution formulation is preferably 0.4 to 0.7 in terms of N/alkali metal (molar ratio).

It is preferable that the above Cl/N (molar ratio) corresponds to the ratio of Cl₂ mole number of the chlorine-based oxidizing agent measured according to JIS K 0400-33-10: 1999 to the mole number of the sulfamic acid compound composed of N. In addition, it is preferable that the N/alkali metal (molar ratio) corresponds to the ratio of the mole number of the sulfamic acid compound to the mole number of the alkali composed of alkali metal hydroxide.

Note that, an upper limit value and a lower limit value of each component of the aqueous solution formulation can be arbitrarily combined as desired.

### <1-5b. Sulfamic acid of combined chlorine agent>

The sulfamic acid constituting the sulfamic acid compound of the combined chlorine agent is preferably an amidosulfuric acid represented by R¹R²NSO₃H ... [1]. In Formula [1], it is preferable that R¹ and R² are each independently H or a hydrocarbon group having 1 to 6 carbon atoms. As such sulfamic acid, "sulfamic acid in a narrow sense" in which R¹ and R² are both H is more preferable, while N-methylsulfamic acid, N, N-dimethylsulfamic acid, N-phenylsulfamic acid and the like may also be used. The sulfamic acid compound may be the sulfamic acids used in a state of free acid (in powder form) or salts such as alkali metal salts including sodium salts, potassium salts, and the like.

### <1-5c. Alkaline component of combined chlorine agent>

Alkaline component constituting the combined chlorine agent is preferably, but not limited to, an alkali consisting of an alkali metal hydroxide. The alkali metal hydroxide may be, for example, sodium hydroxide salt, potassium hydroxide salt, or the like.

In addition, the chlorine-based oxidizing agent may be hypochlorous acid, chlorous acid, or a soluble salt such as an alkali metal salt thereof. More preferably, none of these chlorine-based oxidizing agents contains sodium chloride. It is preferable to control the sodium chloride in the aqueous solution formulation to 50,000 mg/L or lower. Accordingly, precipitation of salt can be prevented and stability of the chlorine-based oxidizing agent can be improved.

The combined chlorine agent can be produced by a process in which the sulfamic acid compound is added to an alkali aqueous solution consisting of an alkali metal hydroxide and dissolved, and then the chlorine-based oxidizing agent is added to and mixed with the obtained aqueous mixture solution of sulfamic acid compound and alkali to prepare an aqueous solution formulation. The prepared aqueous solution formulation may be used as the combined chlorine agent.

The alkali aqueous solution preferably contains 50 to 65% by mass of water.

Alkali consists of alkali metal hydroxide. Such alkali may be sodium hydroxide, potassium hydroxide, or the like, which maintains solubility when made into the aqueous solution of the combined chlorine agent.

### <1-5d. Form of sulfamic acid compound of combined chlorine agent>

The sulfamic acid compound may be added in a form of salt. The salt usable in this case may include, for example, one or more salts selected from sodium sulfamate, potassium sulfamate, ammonium sulfamate and the like, which are soluble when made into the aqueous solution of the combined chlorine agent.

The sulfamic acid compound is preferably added in a manner that the concentration of the sulfamic acid compound in the aqueous solution formulation reaches the above concentration.

The sulfamic acid compound is preferably added in a manner that the content ratio of the alkali and the sulfamic acid compound is 0.4 to 0.7 in terms of N/alkali metal (molar ratio).

As for the sulfamic acid compound, sulfamic acid or a salt thereof can be added in a form of powder or aqueous solution. When sulfamate is used, the amount of the alkali metal contained in the sulfamate is calculated as alkali of Cl/alkali metal and N/alkali metal. When an aqueous solution is used, the amount of water contained in the aqueous solution is calculated as the amount of water in the alkali aqueous solution.

The chlorine-based oxidizing agent is preferably hypochlorous acid or a salt thereof. In this case, the lower limit value of the available chlorine (Ch) concentration is preferably 1% by mass or more, more preferably 5% by mass or more, and the upper limit value is preferably 25% by mass or less, and more preferably 20% by mass or less. In order to satisfy the above numeric range, the hypochlorous acid or a salt thereof is preferably added as an aqueous solution of 5 to 20% by mass, and more preferably 10 to 15% by mass. Note that, the upper limit value and the lower limit value of each component can be arbitrarily combined as desired.

The chlorine-based oxidizing agent is added in a manner that the chlorine-based oxidizing agent in the aqueous solution formulation becomes the above concentration in terms of the available chlorine (Cl₂) concentration, and that the composition ratio of the chlorine-based oxidizing agent to the sulfamic acid compound in terms of Cl/N (molar ratio) becomes the above molar ratio. Accordingly, a combined chlorine agent consisting of aqueous solution formulation superior in reactivity, stability, handling and scentlessness of chlorine is produced efficiently without foaming and emitting chlorine odor. Here, the chlorine-based oxidizing agent is preferably added and mixed gradually. When the chlorine-based oxidizing agent is an alkali metal salt, the amount of the alkali metal is calculated as alkali of Cl/alkali metal and N/alkali metal.

The combined chlorinating agent as described above is used by adding to water to be treated for chlorine treatment. As described above, the agent has low free chlorine concentration and high combined chlorine concentration, so that the combined chlorine concentration of the water system to which the agent has been added can be heightened even when the agent is added at a low free chlorine concentration. Because combined chlorine has higher permeability to biofilm than free chlorine, adhesion of the adhesive material from inside can be reduced. The combined chlorine agent of the present invention can inhibit the activity of microorganisms.

The combined chlorine agent can be added to the water to be treated which is supplied to a membrane separation unit or a membrane separation system for a chlorine treatment in a manner that the upper limit value of the combined chlorine concentration in the water to be treated is preferably 10 mg/L or less, more preferably 5 mg/L or less, and further preferably 3 mg/L or less, and lower upper limit value is preferably 0.3 mg/L or less.

In addition, at this time, it is preferable that the free chlorine concentration in the water to be treated is preferably 0.3 mg/L or less, more preferably 0.1 mg/L or less, and further preferably 0.05 mg/L or less. Deterioration of the RO membrane can be prevented by setting the free chlorine concentration to the above low level.

In the present invention, because the free chlorine concentration in the water to be treated is low, the total chlorine concentration in the water to be treated is substantially equal to the combined chlorine concentration.

When the combined chlorine agent is used as a slime control agent for a permeable membrane such as an RO membrane or the like, the combined chlorine concentration in the water to be treated can be heightened even when the combined chlorine agent is added at a low free chlorine concentration. Thus, even for water in a harsh condition of a large number of live cell count and high biofilm adhesion potential, the available chlorine concentration can be increased to inhibit the activity of biofilm formation, and membrane clogging can be prevented accordingly. By using the above combined chlorine agent, the combined chlorine agent can be added at a high concentration in terms of combined chlorine, and an increase in the activity of biofilm formation in the water to be treated having a large number of live cell count can be prevented.

### <1-6. Short-term intermittent addition conditions>

The present invention is characterized in that the combined chlorine agent containing a sulfamic acid compound is added to the water to be treated to perform a membrane separation treatment under short-term intermittent addition conditions. As for the short-term intermittent addition conditions, it is preferable that each of the intermittent addition water supply period and the non-addition water supply period is short. In addition, it is preferable to alternately repeat the intermittent addition water supply period and the non-addition water supply period. The water to be treated is supplied to a reverse osmosis membrane separation unit or a reverse osmosis membrane separation system.

In the membrane separation treatment of the present invention, one intermittent addition water supply period and one non-addition water supply period are regarded as one cycle, and it is preferable to include at least one cycle. In the membrane separation treatment of the present invention, this one cycle may be continuously or intermittently performed a plurality of times, or the operation of the membrane separation treatment may be performed by setting the operating conditions of the plurality of cycles as one set. In addition, in the present invention, the membrane separation treatment may be operated while appropriately changing the short-term intermittent addition conditions of the present invention according to the passage of time. In the present invention, the operation may be performed by appropriately changing set conditions or by combining a plurality of the set conditions as appropriate. Additionally, in the present invention, the membrane separation treatment can also be performed in accordance with temporal variation of the RO membrane by changing cycle conditions or the set conditions.

The intermittent addition water supply period is a water supply period during which the combined chlorine agent containing a sulfamic acid compound is added to the water to be treated and the water is supplied to the reverse osmosis membrane separation unit.

The non-addition water supply period is a water supply period during which the water is supplied to the reverse osmosis membrane separation unit without adding the combined chlorine agent containing a sulfamic acid compound.

The combined chlorine agent containing a sulfamic acid compound preferably has a concentration at which the activity of microorganisms in the biofilm is inhibited.

Thus, by intermittently adding the combined chlorine agent for a short period of time, the activity of microorganisms in the biofilm (particularly the activity of biofilm formation by microorganisms) can be inhibited more satisfactorily.

In the present invention, by setting the short-term intermittent addition conditions, the activity of biofilm formation by microorganisms can be inhibited more efficiently even with a small addition amount of the agent. By repeating the non-addition water supply period and the intermittent addition water supply period, the activity of biofilm formation by microorganisms can be further inhibited, and the total amount of biofilm can thus be reduced. Accordingly, the amount of biofilm adhered to the membrane can also be reduced. In addition, a method of constantly and continuously adding the agent instead of adding the agent under the short-term intermittent addition condition as in the present invention is not preferable from the viewpoint of cost. The reason is that this method leads to an increase in the amount of agent.

In addition, the short-term intermittent addition conditions in the present invention are preferably started at or before an initial stage of biofilm formation, more preferably started before a logarithmic growth period of microorganisms in the biofilm, and further preferably started before a growth acceleration stage.

In addition, as for the short-term intermittent addition conditions in the present invention, it is preferable to start the intermittent addition water supply period earlier than the non-addition water supply period. The concentration of the combined chlorine agent in the water to be treated is increased, and the activity of microorganisms in the biofilm can be easily inhibited.

Accordingly, the activity of microorganisms can be efficiently inhibited with a small amount of agent used, and the membrane clogging due to an increase in biofilm formation can be prevented.

### <1-6a. Intermittent addition water supply period>

In the present invention, as for the intermittent addition water supply period during which the combined chlorine agent is added and water is supplied, an upper limit value of a duration of each addition period is preferably 5 hours or less, more preferably 4 hours or less, even more preferably 3 hours or less, still more preferably 2 hours or less, further preferably 1 hour or less, and still further preferably 0.75 hour or less. A lower limit value of the duration of each addition period is preferably 0.25 hour or more, more preferably 0.3 hour or more, further preferably 0.4 hour or more, and still more preferably 0.5 hour or more. The numerical range is preferably 0.25 to 5 hours, more preferably 0.4 to 3 hours, and even more preferably 0.5 to 1 hour. Note that, an upper limit value and a lower limit value of each component can be arbitrarily combined as desired.

### <1-6b. Concentration in water to be treated during intermittent addition water supply period>

The combined chlorine agent is added to the water to be treated during the intermittent addition water supply period, and each component of the water to be treated during the intermittent addition water supply period can be appropriately adjusted by the water to be treated and the combined chlorine agent added thereto. Note that, during the intermittent addition water supply period, the upper limit value and the lower limit value of each component in the water to be treated can be arbitrarily combined as desired according to the range described in the present specification.

The combined chlorine concentration of the water to be treated during the intermittent addition water supply period is not particularly limited, and the lower limit thereof is preferably 0.3 mg/L or more, more preferably 0.5 mg/L or more, and further preferably 1.0 mg/L or more. In addition, the upper limit value thereof is preferably 10 mg/L or less, more preferably 5 mg/L or less, and further preferably 3 mg/L or less. It is preferable to add the agent so that the combined chlorine concentration is preferably in a range of 0.3 to 10 mg/L, more preferably 0.5 to 5 mg/L, and further preferably 1 to 3 mg/L.

By setting the concentration as described above, the activity of microorganisms in the biofilm (particularly, the activity of biofilm formation by microorganism) can be efficiently inhibited. Note that, the upper limit value and the lower limit value of each component can be arbitrarily combined as desired.

During the intermittent addition water supply period, the composition ratio of the chlorine-based oxidizing agent to the alkali metal component in terms of Cl/alkali metal (molar ratio) in the water to be treated is not particularly limited, and is preferably 4 × 10⁻⁶ to 1 × 10⁻³, more preferably 2 × 10⁻⁵ to 5 × 10⁻⁴, and further preferably 3 × 10⁻⁵ to 2.4 × 10⁻⁴. It is preferable to add the agent in the above range.

It is preferable to add the agent in a manner that the ratio of Br and Cl in terms of Br/Cl (molar ratio) in the water to be treated during the intermittent addition water supply period is preferably in a range of 5 × 10⁻³ or less.

### <1-6c. Non-addition water supply period>

In the present invention, an upper limit value of the non-addition water supply period during which water is supplied without adding the combined chlorine agent is 5.5 hours or less, still more preferably 5 hours or less, further preferably 4 hour or less, still further preferably 3 hours or less, and particular preferably 2.5 hours or less. In addition, a lower limit value of the non-addition water supply period is preferably 0.25 hour or more, more preferably 0.5 hour or more, further preferably 1 hour or more, and still further preferably 2 hours or more. The numerical range is preferably 1 to 5.5 hours, more preferably 1 to 4 hours, and further preferably 1 to 3 hours. Note that, the upper limit value and the lower limit value of each component can be arbitrarily combined as desired.

### <1-6d. Average concentration of combined chlorine agent in water to be treated>

An average concentration of the combined chlorine agent (mg/L, as combined chlorine) in the water to be treated per cycle is not particularly limited. A lower limit value of the average concentration per cycle is preferably 0.05 mg/L or more, more preferably 0.1 mg/L or more, and further preferably 0.2 mg/L or more, and the upper limit value is preferably 1.5 mg/L or less, more preferably 1.0 mg/L or less, and further preferably 0.5 mg/L or less. The numerical range of the average concentration per cycle is preferably 0.05 to 1.5 mg/L (as combined chlorine), more preferably 0.1 to 1.0 mg/L (as combined chlorine), and further preferably 0.2 to 0.5 mg/L (as combined chlorine). Note that, the upper limit value and the lower limit value of each component can be arbitrarily combined as desired.

In the present invention, one intermittent addition water supply period and one non-addition water supply period are referred to as one cycle, and it is desirable that this one cycle is repeated as one unit.

The average concentration of the combined chlorine agent in the water to be treated per cycle can be adjusted by the intermittent addition water supply period, the amount of the combined chlorine agent added, and the non-addition water supply period. In addition, this cycle condition can be changed as appropriate.

In the present invention, the short-term intermittent addition conditions have been found from the viewpoint of inhibiting the activity of microorganisms adhering to the RO membrane. Furthermore, in the present invention, the average concentration of the combined chlorine agent in the water to be treated per cycle has been found from the short-term intermittent addition conditions. Accordingly, in the present invention, during long-term operation, the amount of the combined chlorine agent added to the water to be treated can be made more appropriate as compared with the conventional continuous addition or the conventional intermittent addition. Therefore, the present invention is also advantageous in terms of cost.

### <1-6e. Ratio and cycle of intermittent addition water supply period and non-addition water supply period>

In the present invention, a time ratio of [non-addition water supply period/intermittent addition water supply period] is not particularly limited, and a lower limit value thereof is preferably 0.2 or more, more preferably 0.5 or more, even more preferably 2 or more, still more preferably 3 or more, further preferably 4 or more, and still further preferably 5 or more, and an upper limit value is preferably 24 or less, more preferably 20 or less, further preferably 15 or less, and still further preferably 10 or less. The numerical range of the time ratio of [non-addition water supply period/intermittent addition water supply period] is preferably 0.2 to 24, more preferably 3 to 10, further preferably 5 to 10, and still further preferably 6 to 8. Note that, the upper limit value and the lower limit value of each component can be arbitrarily combined as desired.

In the present invention, when one intermittent addition water supply period and one non-addition water supply period are regarded as one cycle, the duration of the one cycle is not particularly limited, and a lower limit value thereof is preferably 0.75 hour or more, more preferably 1 hour or more, still more preferably 1.25 hours or more, further preferably 1.5 hours or more, and still further preferably 2 hours or more, and an upper limit value thereof is preferably 11 hours or less, more preferably 10 hours or less, even more preferably 9 hours or less, still more preferably 8 hours or less, further preferably 7 hours or less, still further preferably 5 hours or less, still further preferably 4 hours or less, still further preferably 3.5 hours or less, still further preferably 3 hours.

The numerical range of the duration of the one cycle is preferably 1.25 to 11 hours, more preferably 1.5 to 11 hours, further preferably 1.5 to 9 hours, and still further preferably 1.5 to 5 hours.

Note that, the upper limit value and the lower limit value of each component can be arbitrarily combined as desired.

### <1-6f. Membrane surface flow velocity>

In the present invention, a membrane surface flow velocity of a separation membrane used for water supply in the membrane separation treatment is not particularly limited. It is preferable to operate in a manner that the flow velocity is 2 to 20 cm/sec, more preferably 4 to 15 cm/sec, and further preferably 6 to 10 cm/sec.

### 2. Water treatment method according to the present invention

The embodiment of the present invention is the membrane separation method as described above. In this method, membrane separation treatment is performed by intermittently adding the combined chlorine agent containing a sulfamic acid compound into the water to be treated, which is supplied to a reverse osmosis membrane separation unit or a reverse osmosis membrane separation system, for a short period of time in order to inhibit the activity of microorganisms in the biofilm (particularly the activity of biofilm formation by microorganisms). According to this method, stable water treatment can be performed over a long period of time.

The reverse osmosis membrane treatment in the present embodiment is a process of performing at least the reverse osmosis membrane treatment, and at least a RO membrane treatment apparatus can be provided. In addition, the reverse osmosis membrane treatment can be provided in a general water treatment apparatus or water treatment system capable of removing impurities (salts, organic substances, or the like) to purify water or desalinate seawater. The reverse osmosis membrane treatment can be provided for, for example, an ultrapure water treatment manufacturing process, a wastewater recovery process, a seawater desalination process, and the like.

The water treatment system (or water treatment apparatus) including a RO membrane treatment step of the present embodiment preferably includes any one of a biological treatment step, a coagulation treatment step, a precipitation treatment step, a dissolved air flotation treatment step, a solid-liquid separation step, a sand filtration treatment step, a membrane (MF, UF, or the like) treatment step, or the like, or a processing system in which a plurality of these steps are combined. In addition, these treatment steps may be performed using a processing apparatus.

In addition, it is preferable that the reverse osmosis membrane treatment of the present embodiment or the water treatment system including the reverse osmosis membrane treatment has a coagulation treatment step, a solid-liquid separation treatment step, and a membrane decontamination treatment step arranged sequentially or in no particular order. Additionally, these treatment steps may be performed using the processing apparatus.

Accordingly, any one of these treatment steps (or apparatus) or a combination thereof can be performed to obtain preprocessed RO feed water. The membrane decontamination treatment is not particularly limited, and may include, for example, a microfiltration membrane (MF membrane) treatment, an ultrafiltration membrane (UF) treatment and the like, and one or a combination of two or more of these treatments may be used. Accordingly, impurities in the RO feed water can be reduced, and RO membrane treatment system can be operated more favorably in a stable state over a long period of time. Therefore, it is preferable to perform the pretreatment before the RO membrane treatment.

In the present embodiment, the conditions for passing water may be appropriately set according to the RO membrane separation. The conditions for passing water include, for example, a target recovery rate, a feedwater pressure (MPa) of the water to be treated, a feedwater pH of the water to be treated, a feedwater amount (mL/min) of the water to be treated, and the like.

In order to efficiently operate the RO membrane separation treatment in a long-term, the target water recovery rate can be up to about 60%, preferably about 30 to 50%, and the feedwater pressure is preferably about 4 to 8 MPa.

The feedwater pH of the water to be treated according to the present embodiment is not particularly limited, and is preferably 3.0 to 9.0, more preferably 4.0 to 8.0, and further preferably 5.0 to 7.0. The pH may be adjusted with a pH adjusting agent. By setting the pH in the above pH range, the agent used in the present embodiment can be effectively used, and the RO membrane separation treatment can be operated in a more favorable and stable manner over a long period of time.

Moreover, the method of the present embodiment may also be implemented by a control unit including a CPU or the like in an apparatus for managing water quality (for example, a computer, PLC, or the like). In addition, the method of the present embodiment may also be stored as a program in a hardware resource including a recording medium (nonvolatile memory (USB memory or the like), HDD, CD, or the like) and implemented by the control unit. It is also possible to provide a membrane separation treatment system or a water treatment system or these apparatuses in which the addition of the agent to the water to be treated is controlled by the control unit. Additionally, the management apparatus may be provided with an input unit such as a keyboard, a communication unit such as a network, a display unit such as a display, and the like.

### <2-1. Example 1 of the embodiment of the present invention>

Hereinafter, Example 1 of the embodiment of the present invention is described with reference to FIG. 1, but the present invention is not limited thereto.

The water to be treated in Example 1 of the present embodiment includes seawater, river water, well water, lake water, industrial water, city water, wastewater, treated wastewater, and the like. The water to be treated may contain organic substances. By applying the present invention to industrial wastewater treatment or the like, treated water from which organic compounds have been removed (for example, recycled water, pure water, ultrapure water, or the like) can also be obtained. In addition, the water to be treated may contain salt. By applying the present invention to seawater desalination or the like, treated water from which salt has been removed (for example, drinking water, pure water, ultrapure water, or the like) can also be obtained.

FIG. 1 shows a water treatment system 30 of the present embodiment, and shows a flow chart of the water treatment system 30 having an RO membrane treatment system 31 that has a typical RO membrane in the present embodiment. The water treatment steps include a coagulation treatment step 32 in which an aggregating agent is added to the water to be treated (raw water) in a coagulation apparatus, a solid-liquid separation step 33 in which the coagulation-treated water is treated by a solid-liquid separator, a prefilter treatment step 34, and a reverse osmosis membrane treatment step 31 in which the treatment is performed by the RO membrane treatment apparatus. Besides, before the RO membrane treatment 31 that has undergone the prefilter treatment step 34, the method of the present invention is performed, that is, the membrane separation treatment of the reverse osmosis membrane is performed by intermittently adding the combined chlorine agent for a short period of time as described above.

The combined chlorine agent in the present embodiment is added to the water to be treated that has not been subjected to the RO membrane treatment. The combined chlorine agent is preferably added at a time before the RO membrane treatment and after the coagulation treatment, and more preferably added at a time between the RO membrane treatment and the prefilter treatment.

By adding the combined chlorine agent to the water to be treated that has not been subj ected to the RO membrane treatment, the amount of the biofilm adhering to the RO membrane surface or the RO membrane separation unit (module) can be reduced. Furthermore, the water to be treated is divided into concentrated water containing organic compounds and salt contained in the concentrated water and permeated water by being subjected to the RO membrane treatment step, and the permeated water can be obtained as the treated water.

### [Example]

The embodiment of the present invention is described with reference to the following test examples, examples, comparative examples, and the like. Note that, the scope of the present invention is not limited to the examples or the like.

### <Test Examples 1 and 2>

### [Protocols of Test Example 1 and Test Example 2]

For Test Example 1 (exposure for 0.5 h → non-addition period), 6-well plates (9 sets in total) were prepared for each of the following: control, exposure for 0.5 h → non-addition period of 0 h (0.5 h in total), exposure for 0.5 h → non-addition period of 0.5 h (1.0 h in total), exposure for 0.5 h → non-addition period of 1.5 h (2.0 h in total), exposure for 0.5 h → non-addition period of 2.5 h (3.0 h in total), exposure for 0.5 h → non-addition period of 3.5 h (4.0 h in total), exposure for 0.5 h → non-addition period of 4.5 h (5. 0 h in total), exposure for 0.5 h →non-addition period of 5.5 h (6.0 h in total), exposure for 0.5 h →non-addition period of 6.5 h (7.0 h in total).

For Test Example 2 (exposure for 1 h → non-addition period), 6-well plates (8 sets in total) were prepared for each of the following: control, exposure for 1 h → non-addition period of 0 h (1.0 h in total), exposure for 1 h →non-addition period of 1 h (2.0 h in total), exposure for 1 h →non-addition period of 2 h (3.0 h in total), exposure for 1 h → non-addition period of 3 h (4.0 h in total), exposure for 1 h →non-addition period of 4 h (5.0 h in total), exposure for 1 h →non-addition period of 5 h (6.0 h in total), exposure for 1 h → non-addition period of 6 h (7.0 h in total).

Then, 5 mL of seawater medium (Difco ^{™} Marine Broth 2216) (37.4 g/L) was added to each well in each plate (see Table 1). A suspension containing 1 mL of microorganisms was added to each well so that the live cell count becomes 3 × 10⁵ count/mL (log count/mL is 5 or more). A SWC5-4040 membrane (manufactured by Nitto Denko Corporation: polyamide type) having a size of 2 cm × 2 cm for adhering bacteria was placed in each well and immersed in the seawater medium. After the bacteria had adhered, the 6-well plates were incubated at 37°C in an orbital shaker at 180 rpm.

### [Suspension of microorganisms]

The seawater medium containing a suspension of microorganisms was incubated at 37°C in the orbital shaker at 180 rpm. A solution containing an overnight culture of bacteria was centrifuged at 4500 rpm for 20 minutes, and the two tubes were combined for an additional 10 minutes of centrifugation. The bacterial suspension was diluted with about 65 mL of 0.85% NaCl. The diluted solution containing bacteria was used in Test Example 1 and Test Example 2.

As the bacteria used in this test example, Bacillus species can be used which adhere to the reverse osmosis membrane after seawater is passed through the reverse osmosis membrane for a certain period of time. In this test example, a BF1 strain obtained by the following operation was used. Specifically, the BF1 strain used in a batch test was extracted from a biofouling membrane coupon obtained by operating a laboratory-scale reverse osmosis (RO) system using raw seawater in Western Singapore. The BF1 strain was identified as Bacillus acidicola based on the results of 16S rRNA sequencing.

**Table 1:**

| Marine broth composition (37.4 g/L) | |
|---|---|
| Difco ^{™} Marine Broth 2216 Approximate Formula * | |
| Per Liter | |
| Peptone | 5.0 g |
| Yeast Extract | 1.0 g |
| Ferric Citrate | 0.1 g |
| Sodium Chloride | 19.45 g |
| Magnesium Chloride | 5.9 g |
| Magnesium Sulfate | 3.24 g |
| Calcium Chloride | 1.8 g |
| Potassium Chloride | 0.55 g |
| Sodium Bicarbonate | 0.16 g |
| Potassium Bromide | 0.08 g |
| Strontium Chloride | 34.0 mg |
| Boric Acid | 22.0 mg |
| Sodium Silicate | 4.0 mg |
| Sodium Fluoride | 2.4 mg |
| Ammonium Nitrate | 1.6 mg |
| Disodium Phosphate | 8.0 mg |

After 1 day of incubation, the seawater medium in the well was discarded and replaced with seawater medium containing the combined chlorine agent. The seawater medium containing the combined chlorine agent was prepared by mixing the combined chlorine agent and the seawater medium so that the concentration of the combined chlorine was 3 mg/L (as combined chlorine). This allowed the SWC5-4040 membrane to be immersed in the seawater medium containing the combined chlorine agent and exposed.

Each 6-well plate of Test Example 1 and Test Example 2 was exposed for 0.5 hour and 1 hour, respectively. This exposure period was defined as the intermittent addition water supply period.

### [Combined chlorine agent]

As the combined chlorine agent, the combined chlorine agent containing a sulfamic acid compound consisting of an aqueous solution (pH 13) which contains 2% of sodium hypochlorite (in terms of available chlorine (Cl2) concentration), 8% of sulfamic acid (sulfamic acid in the narrow sense in which R¹ and R² are both H) and 1% of sodium hydroxide was prepared and used in Test Example 1 and Test Example 2.

Moreover, because free chlorine is below a detection limit when the combined chlorine agent is used, the combined chlorine concentration in the water to be treated is regarded as the total chlorine concentration in the water to be treated.

After being exposed in each well for a predetermined time, the seawater medium containing the combined chlorine agent in each well was discarded, and 6 mL of 1 × PBS (Phosphate-buffered saline) was added instead. The state in which the PBS was added was defined as a state in which no combined chlorine agent was added, and the non-addition period was defined as the non-addition water supply period. As for each 6-well plate, after a predetermined period had passed, the characteristics of the membrane were confirmed during each intermittent addition water supply period - non-addition water supply period.

In addition, with respect to each control of Test Example 1 and Test Example 2, the incubation was carried out directly in the seawater medium without replacing with the seawater medium which contains the combined chlorine agent, and incubation was further carried out without performing PBS replacement. The incubation continues for a total of 7.5 hours for the control in Test Example 1 while the incubation continues for a total of 8 hours for the control in Test Example 2.

### [Characteristics of membrane and suspension]

The membranes having a size of 2 × 2 cm in each well plate were removed. Then, each of the membranes was immersed in 10 mL of 0.85% sterile NaCl solution, and each solution was stirred for 3 minutes. Next, the solution was stirred for 10 seconds to separate the biofilm from the membrane surface for protein and cell viability analysis. This operation was performed for each well plate of Test Example 1 and Test Example 2, and these solutions were used as sample solutions.

The live cell count, total ATP, and total protein amount were measured using each sample solution so as to confirm the characteristics of the membrane.

### [Measurement method of total protein amount]

Quantification of protein content in extracellular polysaccharide was performed using Micro bicinchoninic acid (BCA) Protein Assay Kit (Pierce, # 23235). 1 mL of working solution (reaction reagent) was added to 1 mL of sample solution to obtain a mixed solution. The mixture was incubated in the dark at room temperature for 20 minutes. Subsequently, the UV absorbance was measured at 562 nm (A562). This operation was performed for each sample solution. A standard calibration curve was prepared by measurement using bovine serum albumin (BSA, Pierce).

### [Method for counting live cell count]

The live cell count (cell viability) was quantified using a flow cytometer (BD Biosciences, USA). 1 mL of the sample solution was stained with 1 µL of SYTO ^{(R)} 9 dye and PI (Propidium iodide) dye (LIVE/DEAD^{(R)} BacLight^{™} Bacterial Viability Kit: Molecular Probes, USA). Moreover, maximum excitation/emission wavelengths of these dyes are 480/500 nm for the SYTO ^{(R)} 9 dye and 490/635 nm for the PI dye. The sample solution was transferred to a flat-bottom well plate for flow cytometric analysis (using an unstained sample as a control). The results were processed using proprietary software (CSampler, BD, USA). Counts within a defined region of a density plot were converted to live cells and dead cells. This operation was performed for each sample solution.

### [Measurement method of total ATP]

The biofilm was extracted using a cotton swab from the membrane that has a size of 2 × 2 cm and immersed in 10 mL of MilliQ water for 2 minutes. The ATP of the extracted biofilm was measured using Kikkoman's ATP assay kit and Lumitester (Lumitester C-110: Kikkoman, Japan).

### <Test result>

The measurement results of the "total protein amount", "live cell count (count)", and "total ATP" when the agent was exposed for 0.5 hour in Test Example 1 are shown in Tables 2, 3 and 4, respectively. The results are shown in FIG. 2. In addition, Table 5 shows the measurement results of the "total protein amount" when the agent was exposed for 1 hour in Test Example 2.

**Table 2:**

| Exposure period of 0.5 h → non-addition period | | | | | |
|---|---|---|---|---|---|
| Protein | | | | | |
| Time after dosing (hr)^{*1)} | Exposure time (hr) | Non-addition period (hr) | µg/cm ² | STDEV | Relative ratio (%) |
| 0^{*2)} | 0 | 0 | 35 | 2 | 100 |
| 0.5 | 0.5 | 0 | 11 | 0 | 32 |
| 1 | 0.5 | 0.5 | 11 | 0 | 30 |
| 2 | 0.5 | 1.5 | 10 | 1 | 28 |
| 3 | 0.5 | 2.5 | 8 | 2 | 22 |
| 4 | 0.5 | 3.5 | 24 | 17 | 68 |
| 5 | 0.5 | 4.5 | 18 | 5 | 51 |
| 6 | 0.5 | 5.5 | 12 | 0 | 34 |
| 7 | 0.5 | 6.5 | 17 | 6 | 49 |

| | | | | | |
|---|---|---|---|---|---|
| * 1): Time after dosing (hr) = Exposure Time (hr) + Non-addition Time (hr) * 2) (hr): control | | | | | |

**Table 3:**

| Exposure period of 0.5 h → non-addition period | | | | | |
|---|---|---|---|---|---|
| Live cell count | | | | | |
| Time after dosing (hr)^{*1)} | Exposure time (hr) | Non-addition period (hr) | count/cm² | STDEV | Relative ratio (%) |
| 0^{*2)} | 0 | 0 | 1879417 | 853478 | 100 |
| 0.5 | 0.5 | 0 | 236500 | 31584 | 13 |
| 1 | 0.5 | 0.5 | 238583 | 6364 | 13 |
| 2 | 0.5 | 1.5 | 320500 | 170059 | 17 |
| 3 | 0.5 | 2.5 | 557417 | 224860 | 30 |
| 4 | 0.5 | 3.5 | 231042 | 41307 | 12 |
| 5 | 0.5 | 4.5 | 275833 | 104416 | 15 |
| 6 | 0.5 | 5.5 | 295500 | 76132 | 16 |
| 7 | 0.5 | 6.5 | 1571250 | 549186 | 84 |

| | | | | | |
|---|---|---|---|---|---|
| * 1): Time after dosing (hr) = Exposure Time (hr) + Non-addition Time (hr) * 2) (hr): control | | | | | |

**Table 4:**

| Exposure period of 0.5 h → non-addition period | | | | |
|---|---|---|---|---|
| Total ATP | | | | |
| Time after dosing (hr) ^{*1)} | Exposure time (hr) | Non-addition period (hr) | count/cm² | STDEV |
| 0^{*2)} | 0 | 0 | 123051 | 138432 |
| 0.5 | 0.5 | 0 | 88446 | 232 |
| 1 | 0.5 | 0.5 | 95505 | 74958 |
| 2 | 0.5 | 1.5 | 42349 | 1703 |
| 3 | 0.5 | 2.5 | 96126 | 26263 |
| 4 | 0.5 | 3.5 | 49979 | 57983 |
| 5 | 0.5 | 4.5 | 350080 | 2201 |
| 6 | 0.5 | 5.5 | 216288 | 157212 |
| 7 | 0.5 | 6.5 | 171957 | 27352 |

| | | | | |
|---|---|---|---|---|
| * 1): Time after dosing (hr) = Exposure Time (hr) + Non-addition Time (hr) * 2) (hr): control | | | | |

**Table 5:**

| Exposure period of 1 h → non-addition period | | | | | |
|---|---|---|---|---|---|
| Protein | | | | | |
| Time after dosing (hr) ^{*1)} | Exposure time (hr) | Non-addition period (hr) | µg/cm² | STDEV | Relative ratio (%) |
| 0^{*2)} | 0 | 0 | 38 | 3 | 100 |
| 1 | 1.0 | 0.0 | 12 | 4 | 32 |
| 2 | 1.0 | 1.0 | 16 | 4 | 41 |
| 3 | 1.0 | 2.0 | 9 | 1 | 23 |
| 4 | 1.0 | 3.0 | 8 | 0 | 21 |
| 5 | 1.0 | 4.0 | 6 | 1 | 16 |
| 6 | 1.0 | 5.0 | 10 | 2 | 25 |
| 7 | 1.0 | 6.0 | 21 | 2 | 54 |

| | | | | | |
|---|---|---|---|---|---|
| * 1): Time after dosing (hr) = Exposure Time (hr) + Non-addition Time (hr) * 2) (hr): control | | | | | |

As shown in Tables 2 to 4 and FIG. 2, in the reverse osmosis membrane in which microorganisms are present in the biofilm, when the combined chlorine agent containing a sulfamic acid compound was used and exposed for 0.5 hour and then retained for 0.5 to 6.0 hours in a state that the agent was not added, the total protein amount and the live cell count of microorganisms were significantly lower than those at the initial zero time (control), and the activity of microorganisms could be inhibited in an extremely efficient manner. In addition, the total ATP usually tends to increase sharply before an increase in growth rate and subsequent increase in metabolite production.

In addition, as shown in Table 5, when the combined chlorine agent containing a sulfamic acid compound was used and exposed for 1.0 hour and then retained for 1.0 to 6.0 hours in a state that the agent was not added, the total protein amount is significantly lower than that at the initial zero time (control), and the activity of microorganisms could be inhibited in an extremely efficient manner.

Therefore, in Test Examples 1 and 2, when the combined chlorine agent containing a sulfamic acid compound was exposed for 0.5 to 1 hour and then retained for 6.5 hours or 6 hours in a state that the agent was not added, the live cell count, the total ATP, and the total protein amount began to rise sharply. Therefore, it was considered that the activity of microorganisms could be efficiently inhibited when the state in which the agent was not added was maintained for up to 6 hours. As described above, in Test Examples 1 and 2, it was confirmed that the activity of microorganisms as well as the formation of the biofilm could be inhibited when the combined chlorine agent containing a sulfamic acid compound was exposed for 0.5 to 1 hour and then retained for 0.5 to 6.0 hours in a state that the agent was not added.

Conventionally, since attention has been paid to the peeling of the biofilm formed by microorganisms, it has been considered that the longer the non-addition period, the longer and more stable the water treatment could be continued in the reverse osmosis membrane separation. In contrast, as a result of conducting tests after activating and proliferating microorganisms (that is, focusing on the activity of microorganisms), the present inventor has newly found a short-term intermittent addition method by which stable water treatment is continued over a long period of time in the reverse osmosis membrane separation.

In addition, it is considered that the exposure period is preferably 0.25 to 5 hours in terms of the effects and cost of Test Examples 1 and 2 in the present application. Accordingly, it is considered that the duration of one cycle is preferably 1.25 to 11 hours, and more preferably 1.5 to 7 hours.

The activity of microorganisms in the biofilm could be inhibited by intermittently adding the combined chlorine agent for a short period of time as described above. Therefore, in the reverse osmosis membrane separation, stable water treatment can be continued over a long period of time by using the short-term intermittent addition conditions of the present invention.

The average concentration of the combined chlorine agent in the water to be treated was calculated by the combined chlorine concentration in the medium of 3 mg/L (as combined chlorine) × exposure period (h)/1 cycle period (h).

Because the exposure was performed in a state that the combined chlorine concentration in the medium is 3 mg/L (as combined chlorine), when the exposure period of 0.5 h and the non-addition period of 1 to 6 h were regarded as one cycle, the average concentration of the combined chlorine agent in the water to be treated per cycle was 1.00 mg/L, 0.60 mg/L, 0.42 mg/L, 0.33 mg/L, 0.27 mg/L, and 0.23 mg/L (as combined chlorine), respectively, when the non-addition period was 1 h, 2 h, 3 h, 4 h, 5 h, and 6 h.

In addition, because the exposure was performed in a state that the combined chlorine concentration in the medium is 3 mg/L (as combined chlorine), when the exposure period of 1.0 h and the non-addition period of 1 to 6 h were regarded as one cycle, the average concentration of the combined chlorine agent in the water to be treated per cycle was 1.50 mg/L, 1.00 mg/L, 0.75 mg/L, 0.60 mg/L, 0.50 mg/L, and 0.43 mg/L (as combined chlorine), respectively, when the non-addition period was 1 h, 2 h, 3 h, 4 h, 5 h, and 6 h.

Thus, it is considered that the average concentration of the combined chlorine agent in the water to be treated is preferably 0.05 to 1.5 mg/L (as combined chlorine) per cycle, more preferably 0.1 to 1.0 mg/L (as combined chlorine) per cycle, and further preferably 0.2 to 1.0 mg/L (as combined chlorine) per cycle.

In addition, during the exposure period, the composition ratio of the chlorine-based oxidizing agent to the alkali metal component in the medium was 2 × 10⁻⁵ to 1 × 10⁻³ in terms of Cl/alkali metal (molar ratio), and this range is thus considered to be desirable.

Additionally, during the exposure period, the ratio of Br and Cl in the medium was 5 × 10⁻³ or less in terms of Br/Cl (molar ratio), and this range is thus considered to be desirable.

Besides, the live cell count in the medium before the start of the test was 3 × 10⁵ count/mL. Thus, it is considered that the effect of the present invention can be satisfactorily exerted when the live cell count (log count/mL) is up to 5, and the effect of the present invention can be further satisfactorily exerted by performing the present invention on microorganisms having a live cell count (log count/mL) of 4 or less, 3 or less, or even less than 3.

### <Reference Test Example 3 and Test Example 4>

Reference Test Example 3 and Test Example 4 were carried out under the following experimental conditions of a pilot plant. The combined chlorine agent used in Reference Test Example 3 and Test Example 4 is the same as the combined chlorine agent used in Test Example 1 and Test Example 2 described above. In addition, because the free chlorine concentration of the combined chlorine agent is below a detection limit, the combined chlorine concentration in the water to be treated is regarded as equal to the total chlorine concentration in the water to be treated.

### The apparatus configuration is as shown in FIG. 3.

Seawater from which impurities have been removed is treated by UF membrane treatment, and the treated seawater is used as raw water and stored in a raw water storage tank 51. The raw water flows from the raw water storage tank 51 to a supply tank 52. In order to prevent biofouling, SBS is added to a flow passage between the raw water storage tank 51 and the supply tank 52 so that T-Cl₂ (total chlorine concentration) < 0.1 mg/L and ORP <300 mV. The SBS-treated raw water is pumped from the supply tank 52 to a prefilter (3 µm) 53. A dispersant for scale prevention (SD) is added to a flow passage between the supply tank 52 and the prefilter 53, and the combined chlorine agent (CCA) is added simultaneously with or separately from the dispersant for scale prevention (SD) under the following <combined chlorine addition conditions>. The treated raw water is subjected to membrane treatment using the prefilter (3 µm) 53. The prefilter-treated raw water is pumped to a reverse osmosis membrane apparatus (SWRO, 4 inches, 4 elements, Nitto SWC5) 54. The transferred raw water is treated by the reverse osmosis membrane apparatus 54 so that Flux = 0.35 m/d is obtained. The raw water is separated into permeated water (fresh water) and wastewater (concentrated water) after being subjected to RO membrane treatment.

Seawater from which impurities have been removed is treated with an UF membrane, and the treated seawater is used as the raw water (UF Permeate). In order to prevent biofouling of an UF membrane apparatus or the like, the raw water is treated by adding sodium hypochlorite therein instead of adding an aggregating agent.

SD: KURIVERTER N300 (manufactured by Kurita Water Industries, Ltd.) is used as a scale dispersant (SD) (for scale prevention).

CCA: The combined chlorine agent (CCA) containing a sulfamic acid compound is used, and during the intermittent addition water supply period, the combined chlorine agent is added to the water to be treated so as to have a concentration "as combined chlorine".

Moreover, the free chlorine of the combined chlorine agent is detected to be to be equal to or less than the detection limit after the combined chlorine agent to be used is added to the water to be treated. Thus, the combined chlorine concentration in the water to be treated is regarded as the total chlorine concentration in the water to be treated. SBS: sodium bisulfite (SBS) is used to reduce sodium hypochlorite added for sterilization of raw seawater.

Membrane used: Nitto Denko SWC5-4040, aromatic polyamide RO membrane
Membrane surface flow velocity: 0.063 m/sec
Recovery rate: 45%
Raw water: seawater
Temperature: 30 to 35°C
pH: 7 to 8

### <Conditions for adding combined chlorine agent: intermittent addition water supply and non-addition water supply conditions>

The water treatment operation was performed in the order of the following first step to fifth step.

As shown in FIG. 4, in the first half (second step and third step), the operation is performed under the following intermittent addition conditions: an intermittent addition water supply period (1 h; addition amount of the combined chlorine agent: 1.2 to 2.4 mg/L, as combined chlorine) and a non-addition water supply period (7 h), which is taken as Reference Test Example 3. In the latter half (fourth step and fifth step), the operation is performed under short-term intermittent addition conditions of the present invention, specifically, the short-term intermittent addition conditions include an intermittent addition water supply period (0.5 h; the addition amount of the combined chlorine agent: 2.4 to 1.8 mg/L, as combined chlorine) and a non-addition water supply period (3.5 h), which is taken as Test Example 4.

First step: the combined chlorine agent was continuously added for 2 weeks under a condition that the combined chlorine concentration in the water to be treated is 0.48 to 0.6 mg/L.

Second step: next, the water treatment operation was carried out from May 7th to May 23rd under a condition that one cycle including an addition water supply period of 1 h (addition amount of the combined chlorine agent: the combined chlorine concentration in the water to be treated: 1.2 mg/L) and a non-addition water supply period of 7 h was repeated.

Third step: subsequently, the water treatment operation was carried out from May 24th to May 27th under a condition that one cycle including an addition water supply period of 1 h (addition amount of the combined chlorine agent: the combined chlorine concentration in the water to be treated: 2.4 mg/L) and a non-addition water supply period of 7 h was repeated.

Fourth step: after that, the water treatment operation was carried out from May 27th to June 18th under a condition that one cycle of the present invention including an addition water supply period of 0.5 h (addition amount of the combined chlorine agent: the combined chlorine concentration in the water to be treated: 2.4 mg/L) and a non-addition water supply period of 3.5 h was repeated.

Fifth step: then, the water treatment operation was carried out from June 19th to June 30th under a condition that one cycle of the present invention including an addition water supply period of 0.5 h (addition amount of the combined chlorine agent: the combined chlorine concentration in the water to be treated: 1.8 mg/L) and a non-addition water supply period of 3.5 h was repeated.

### <Test result>

FIG. 4 shows changes in RO delta pressure in the water system. Reference Test Example 3 of the first half (second step to third step) corresponds to the intermittent addition conditions of Patent literature 3. The latter half is Test Example 4 (fourth step to fifth step) according to the present invention.

The operation continued for 20 days from the start of the second step to the end of the third step, that is, from May 7th (delta pressure: 0.107 MPa) to May 27th (delta pressure 0.165 MPa).

The inclination from the start of the second step to the end of the third step was 0.0029 MPa/day.

The operation continued for 33 days from the start of the fourth step to the end of the fifth step, that is, from May 28th (delta pressure: 0.165 MPa) to June 30th (delta pressure 0.210 MPa).

The inclination from the start of the fourth step to the end of the fifth step was 0.0014 MPa/day.

In the reverse osmosis membrane system of the pilot plant, the delta pressure can be suppressed well even in Reference Test Example 3. However, when the inclination of the change in the delta pressure of Reference Test Example 3 is compared with the inclination of Test Example 4 according to the present invention, the inclination of Test Example 4 was about half or less of the inclination of Reference Test Example 3. The smaller the inclination of the change in delta pressure, the longer and more stably the water treatment can be continued in the reverse osmosis membrane treatment. Thus, it was confirmed that the present invention has a remarkably excellent effect from the viewpoint of continuing stable water treatment for a long period of time, even when compared with the method using the intermittent addition conditions of Patent literature 3. In addition, as shown in Test Examples 1 and 2, the short-term intermittent addition conditions of the present invention are conditions under which the activity of microorganisms in the biofilm can be satisfactorily inhibited.

For these reasons, compared with the conventional method, the activity of microorganisms in the biofilm can be inhibited, and the present invention has a particularly remarkable effect that the stable water treatment in the reverse osmosis membrane separation can be continued over a long period of time.

### [Industrial applicability]

The present invention is applicable to a membrane separation method which is performed by supplying water to be treated to a membrane separation unit provided with a permeable membrane such as a reverse osmosis membrane or the like. The present invention is particularly applicable to a membrane separation method in which the activity of microorganisms in a biofilm can be inhibited and stable water treatment can be continued over a long period of time by adding a combined chlorine agent containing a sulfamic acid compound to the feed water in a membrane separation unit under short-term intermittent addition conditions.

### [Reference Signs List]

- 30: water treatment system
- 31: RO membrane treatment apparatus (RO membrane treatment step)
- 32: coagulation apparatus (coagulation treatment step)
- 33: solid-liquid separation apparatus (solid-liquid separation treatment step)
- 34: MF membrane apparatus (prefilter treatment step)
- 50: water treatment system
- 51: raw water storage tank
- 52: supply tank
- 53: prefilter
- 54: RO membrane treatment apparatus
- P: pump
- SBS: sodium bisulfite
- SD: scale dispersant
- CCA: combined chlorine agent

## Claims

1. A membrane separation method in which a membrane separation treatment is performed by an intermittent addition of a combined chlorine agent containing a sulfamic acid compound to water to be treated which is supplied to a reverse osmosis membrane separation unit,
wherein in the intermittent addition, an intermittent addition water supply period and a non-addition water supply period are repeated,
during the intermittent addition water supply period, the combined chlorine agent is added at such a concentration as to inhibit the activity of microorganisms in a biofilm to the water to be treated and the water is supplied to the reverse osmosis membrane separation unit, and
during the non-addition water supply period, the water is supplied to the reverse osmosis membrane separation unit without adding the combined chlorine agent;
the intermittent addition water supply period continues for 0.25 to 5 hours,
wherein the membrane separation method is **characterized in that** the non-addition water supply period continues for 1 to 5.5 hours.

2. The membrane separation method according to claim 1, wherein when one intermittent addition water supply period and one non-addition water supply period are regarded as one cycle, the one cycle continues for 1.25 to 10 hours.

3. The membrane separation method according to claim 1 or 2, wherein a time ratio of [the non-addition water supply period/the intermittent addition water supply period] is 0.2 to 20.

4. The membrane separation method according to any one of claims 1 to 3, wherein the intermittent addition water supply period continues for 0.5 to 1 hour, and/or the non-addition water supply period continues for 1 to 4 hours.

5. The membrane separation method according to any one of claims 1 to 4, wherein when one intermittent addition water supply period and one non-addition water supply period are regarded as one cycle, an average concentration of the combined chlorine agent in the water to be treated is 0.05 to 1.5 mg/L (as combined chlorine) per the one cycle.

6. The membrane separation method according to any one of claims 1 to 5, wherein the membrane separation method is performed in a state that a salinity concentration in the water to be treated is in a range of 0 to 50000 mg/L.

7. The membrane separation method according to any one of claims 1 to 6, wherein during the intermittent addition water supply period, a composition ratio of a chlorine-based oxidizing agent to an alkali metal component in the water to be treated is 2 × 10⁻⁵ to 1 × 10⁻³ in terms of Cl/alkali metal (molar ratio).

8. The membrane separation method according to any one of claims 1 to 7, wherein during the intermittent addition water supply period, a ratio of Br and Cl in the water to be treated is 5 × 10⁻³ or less in terms of Br/Cl (molar ratio).

9. The membrane separation method according to any one of claims 1 to 8, wherein the membrane separation method is performed in a manner that a membrane surface flow velocity in the separation membrane is 4 cm/sec to 15 cm/sec.

## Patentansprüche

1. Membrantrennverfahren, bei dem eine Membrantrennbehandlung durch eine intermittierende Zugabe eines kombinierten Chlormittels, das eine Sulfaminsäureverbindung enthält, zu dem zu behandelnden Wasser, das einer Umkehrosmose-Membrantrenneinheit zugeführt wird, durchgeführt wird,
wobei bei der intermittierenden Zugabe eine intermittierende Zugabe-Wasserzufuhrperiode und eine Nicht-Zugabe-Wasserzufuhrperiode wiederholt werden,
während der intermittierenden Zugabe-Wasserzufuhrperiode das kombinierte Chlormittel in einer solchen Konzentration zugegeben wird, dass die Aktivität von Mikroorganismen in einem Biofilm zu dem zu behandelnden Wasser gehemmt wird, und das Wasser der Umkehrosmose-Membran-Trenneinheit zugeführt wird, und
während der Nicht-Zugabe-Wasserzufuhrperiode das Wasser der Umkehrosmose-Membrantrenneinheit ohne Zugabe des kombinierten Chlormittels zugeführt wird;
die intermittierende Zugabe-Wasserzufuhrperiode für 0,25 bis 5 Stunden fortgesetzt,
wobei das Membrantrennverfahren **dadurch gekennzeichnet ist, dass** die Nicht-Zugabe-Wasserzufuhrperiode für 1 bis 5,5 Stunden fortgesetzt wird.

2. Membrantrennverfahren gemäß Anspruch 1, wobei, wenn eine intermittierende Zugabe-Wasserzufuhrperiode und eine Nicht-Zugabe-Wasserzufuhrperiode als ein Zyklus betrachtet werden, der eine Zyklus für 1,25 bis 10 Stunden fortgesetzt wird.

3. Membrantrennverfahren gemäß Anspruch 1 oder 2, wobei ein Zeitverhältnis von [der Nicht-Zugabe-Wasserzufuhrperiode/der intermittierenden Zugabe-Wasserzufuhrperiode] 0,2 bis 20 beträgt.

4. Membrantrennverfahren gemäß einem der Ansprüche 1 bis 3, wobei die intermittierende Zugabe-Wasserzufuhrperiode für 0,5 bis 1 Stunde fortgesetzt wird und/oder die Nicht-Zugabe-Wasserzufuhrperiode für 1 bis 4 Stunden fortgesetzt wird.

5. Membrantrennverfahren gemäß einem der Ansprüche 1 bis 4, wobei, wenn eine intermittierende Zugabe-Wasserzufuhrperiode und eine Nicht-Zugabe-Wasserzufuhrperiode als ein Zyklus betrachtet werden, eine durchschnittliche Konzentration des kombinierten Chlormittels in dem zu behandelnden Wasser 0,05 bis 1,5 mg/L (als kombiniertes Chlor) pro dem einen Zyklus beträgt.

6. Membrantrennverfahren gemäß einem der Ansprüche 1 bis 5, wobei das Membrantrennverfahren in einem Zustand durchgeführt wird, in dem die Salzkonzentration in dem zu behandelnden Wasser in einem Bereich von 0 bis 50000 mg/L liegt.

7. Membrantrennverfahren gemäß einem der Ansprüche 1 bis 6, wobei während der intermittierenden Zugabe-Wasserzufuhrperiode ein Zusammensetzungsverhältnis eines Oxidationsmittels auf Chlorbasis zu einer Alkalimetallkomponente in dem zu behandelnden Wasser 2 × 10⁻⁵ bis 1 × 10⁻³ beträgt, ausgedrückt als Cl/Alkalimetall (Molverhältnis).

8. Membrantrennverfahren gemäß einem der Ansprüche 1 bis 7, wobei während der intermittierenden Zugabe-Wasserzufuhrperiode ein Verhältnis von Br und Cl in dem zu behandelnden Wasser 5 × 10⁻³ oder weniger beträgt, ausgedrückt als Br/Cl (Molverhältnis).

9. Membrantrennverfahren gemäß einem der Ansprüche 1 bis 8, wobei das Membrantrennverfahren in einer Weise durchgeführt wird, dass eine Strömungsgeschwindigkeit der Membranoberfläche in der Trennmembran 4 cm/s bis 15 cm/s beträgt.

## Revendications

1. Procédé de séparation par membrane dans lequel un traitement de séparation par membrane est effectué par l'ajout intermittent d'un agent chloré combiné contenant un composé d'acide sulfamique à l'eau à traiter qui est fournie à une unité de séparation par membrane d'osmose inverse, dans lequel,
dans l'ajout intermittent, une période d'alimentation en eau par ajout intermittent et une période d'alimentation en eau sans ajout sont répétées,
une période d'approvisionnement en eau par ajout intermittent et une période d'approvisionnement en eau sans ajout sont répétées, pendant la période d'approvisionnement en eau par ajout intermittent, l'agent chloré combiné est ajouté à une concentration telle qu'il inhibe l'activité des micro-organismes dans un biofilm dans l'eau à traiter et l'eau est fournie à l'unité de séparation par membrane d'osmose inverse, et
pendant la période de fourniture d'eau sans ajout, l'eau est fournie à l'unité de séparation membranaire par osmose inverse sans ajout de l'agent chloré combiné ;
la période d'alimentation en eau par ajout intermittent se poursuit pendant 0,25 à 5 heures,
dans lequel le procédé de séparation par membrane est **caractérisé par le fait que** la période d'alimentation en eau sans ajout se poursuit pendant 1 à 5,5 heures.

2. Procédé de séparation par membrane selon la revendication 1, dans lequel lorsqu'une période d'alimentation intermittente en eau et une période d'alimentation en eau sans adjonction sont considérées comme un cycle, le cycle se poursuit pendant 1,25 à 10 heures.

3. Procédé de séparation par membrane selon la revendication 1 ou la revendication 2, dans lequel un rapport de temps de [la période d'alimentation en eau sans adjonction/la période d'alimentation en eau avec adjonction intermittente] est compris entre 0,2 et 20.

4. Procédé de séparation par membrane selon l'une quelconque des revendications 1 à 3, dans lequel la période d'apport intermittent d'eau se poursuit pendant 0,5 à 1 heure, et/ou la période d'apport d'eau sans adjonction se poursuit pendant 1 à 4 heures.

5. Procédé de séparation par membrane selon l'une quelconque des revendications 1 à 4, dans lequel, lorsqu'une période d'alimentation en eau par ajout intermittent et une période d'alimentation en eau sans ajout sont considérées comme un cycle, une concentration moyenne de l'agent chloré combiné dans l'eau à traiter est comprise entre 0,05 et 1,5 mg/L (en tant que chlore combiné) par cycle.

6. Procédé de séparation par membrane selon l'une quelconque des revendications 1 à 5, dans lequel le procédé de séparation par membrane est exécuté dans un état où une concentration de salinité dans l'eau à traiter est comprise entre 0 et 50 000 mg/L.

7. Procédé de séparation par membrane selon l'une quelconque des revendications 1 à 6, dans lequel, pendant la période d'apport intermittent d'eau, un rapport de composition entre un agent oxydant à base de chlore et un composant de métal alcalin dans l'eau à traiter est compris entre 2 × 10⁻⁵ et 1 × 10⁻³ en termes de Cl/métal alcalin (rapport molaire).

8. Procédé de séparation par membrane selon l'une quelconque des revendications 1 à 7, dans lequel, pendant la période d'apport intermittent d'eau, un rapport de Br et de Cl dans l'eau à traiter est inférieur ou égal à 5 × 10⁻³ en termes de Br/Cl (rapport molaire).

9. Procédé de séparation par membrane selon l'une quelconque des revendications 1 à 8, dans lequel le procédé de séparation par membrane est réalisé de telle sorte que la vitesse d'écoulement de la surface de la membrane de séparation est comprise entre 4 cm/sec et 15 cm/sec.
